**Europäisches Patentamt**

**European Patent Office**

**Office européen des brevets**

(11) Numéro de publication : **0 408 427 B1**

(12) **FASCICULE DE BREVET EUROPEEN**

(45) Date de publication du fascicule du brevet :
**28.09.94 Bulletin 94/39**

(51) Int. Cl.⁵ : **G02F 1/17, B60J 7/00**

(21) Numéro de dépôt : **90401942.9**

(22) Date de dépôt : **05.07.90**

(54) **Vitrage électrochrome.**

(30) Priorité : **11.07.89 FR 8909283**

(43) Date de publication de la demande :
**16.01.91 Bulletin 91/03**

(45) Mention de la délivrance du brevet :
**28.09.94 Bulletin 94/39**

(84) Etats contractants désignés :
**AT BE CH DE ES FR GB IT LI LU NL SE**

(56) Documents cités :
**EP-A- 0 189 601**
**EP-A- 0 253 713**
**EP-A- 0 304 198**
**EP-A- 0 338 876**
**DE-A- 3 016 309**

(73) Titulaire : **SAINT-GOBAIN VITRAGE INTERNATIONAL**
**"Les Miroirs"**
**18, avenue d'Alsace**
**F-92400 Courbevoie (FR)**

(72) Inventeur : **Barton, James**
**56, rue de Boulainvilliers**
**F-75016 Paris (FR)**
Inventeur : **Lerbet, François**
**228, boulevard Raspail**
**F-75014 Paris (FR)**

(74) Mandataire : **Menes, Catherine et al**
**SAINT-GOBAIN RECHERCHE 39, Quai Lucien Lefranc**
**F-93300 Aubervilliers (FR)**

## Description

L'invention a pour objet un système électrochrome notamment un vitrage à transmission du type électrochrome ou plus précisément un vitrage feuilleté dont la transmission lumineuse est modifiée par application aux bornes du vitrage d'un potentiel électrique. Les vitrages selon l'invention sont utilisés pour contrôler l'éclairement solaire dans un bâtiment ou dans l'habitat d'un véhicule automobile, notamment d'un véhicule équipé d'un toit en verre.

Des demandes de brevet EP-A-253713 et EP-89400814, il est connu un vitrage feuilleté électrochrome qui est constitué de deux feuilles de verre revêtues de couches conductrices électroniques transparentes - par exemple des couches d'oxyde d'indium dopé à l'étain (ITO) - séparées successivement par une couche d'un matériau électrochrome cathodique tel de l'oxyde de tungstène ($WO_3$), un électrolyte à conduction protonique - par exemple un complexe polymérique entre du polyoxyde d'éthylène (POE) et de l'acide orthophosphorique ($H_3PO_4$) et une couche d'un matériau électrochrome anodique tel que l'oxyde d'iridium. Les deux couches en contact avec l'électrolyte sont capables d'insérer de façon réversible des protons si on applique à deux extrémités opposées du vitrage une différence de potentiel idoine, la réaction d'insertion dans la couche d'oxyde de tungstène correspondant à une réaction de désinsertion dans la couche d'oxyde d'iridium qui joue ainsi le rôle d'une contre-électrode symétrique de l'électrode d'oxyde de tungstène. Les équilibres thermodynamiques peuvent s'écrire de la manière suivante :

$$WO_3 + xH^+ + x\ e^- <---> HxWO_3$$

et

$$HxIrOy <---> IrOy + xH^+ + x\ e^-.$$

La mesure instantanée de l'intensité I du courant qui traverse le vitrage est donc une mesure directe du nombre de sites de réactions d'insertions/désinsertions qui se produisent à ce même instant.

La différence de potentiel appliquée doit être supérieure, en valeur absolue à la différence des potentiels thermodynamiques de la réaction d'insertion ou de désinsertion des protons. Plus la différence de potentiel appliquée est grande et plus la coloration - ou la décoloration - sera rapide. Toutefois, au-delà d'une certaine tension, des parasites risquent de se produire, notamment la réduction en hydrogène moléculaire du proton ou l'oxydation en oxygène de l'eau présente à l'état résiduel dans certaines couches.

Compte-tenu des surtensions aux interfaces, les limites de stabilité électrochimique caractéristiques du système décrit ci-dessus sont comprises entre 0,6 et 1,5 Volts en phase de coloration (insertion des protons dans $WO_3$, désinsertion dans HxIrOy) et entre - 0,6 et 0 Volt en phase de décoloration. Ces limites sont par la suite de ce mémoire qualifiées de "domaine de stabilité électrochimique de la réaction de coloration et de décoloration".

Le second problème qui se pose est le temps nécessaire pour l'obtention d'une coloration ou décoloration voulue, c'est-à-dire dans l'hypothèse d'une coloration/décoloration maximale, le temps nécessaire pour le passage de la quantité de charge correspondant à tous les sites réactionnels potentiels, ou en d'autres termes le temps nécessaire pour que l'intensité I du courant soit réduite à zéro - ou du moins à une valeur proche de zéro.

Lorsque la taille de la cellule augmente, la quantité de charge à faire passer augmente de façon correspondante ; or l'intensité du courant ne peut croître de façon parallèle car la relation théorique entre la différence de potentiel V et le courant I impose I inférieur à V/R où R représente la résistance des amenées de courant et peut être confondue avec une bonne approximation avec la résistance des couches électroconductrices transparentes. Très faible pour des cellules de petites tailles, le terme RI croît rapidement avec la taille des cellules de sorte que les chutes ohmiques deviennent un facteur limitant le courant et par conséquent la vitesse de coloration/décoloration.

Dans une cellule fonctionnant en transmission - ce qui suppose des couches électroconductrices transparentes - il n'est pas possible de choisir des matériaux dont la résistance carrée est inférieure par exemple à 1 ohm ; les matériaux et les techniques de dépôt à ce jour les plus performantes ne permettant que la réalisation de couches de 2 à 5 Ohms de résistance carrée.

Du document EP-A-189 601, il est par exemple connu un dispositif électrochrome fonctionnant en transmission, comportant deux substrats en verre, chacun revêtu d'un film conducteur d'oxyde d'étain, séparés successivement par une couche d'un matériau électrochrome cathodique, l'oxyde de tungstène, un électrolyte liquide et un autre matériau électrochrome tel que du bleu de prusse, des électrodes auxiliaires formées d'un mélange de matériaux bons conducteurs électriques tel que du noir de carbone ou de la poudre de platine étant disposées le long des bords opposés du vitrage et reliées à un générateur de tension.

Avec de telles amenées de courant non ponctuelles mais constituées par des bandes ou fils électroconducteurs longeant deux côtés opposés de la cellule, marqués par un cordon d'étanchéité formant un encadrement autour du vitrage, il est ainsi possible de s'affranchir pour partie de cette limite à la conductivité des films électroconducteurs transparents. Ces bandes ou fils peuvent être choisis dans un matériau très conducteur tel que le cuivre, de sorte que tous les points d'une même bande sont équipotentiels. En conséquence, si on repère la surface du vitrage dans un système de coordonnées cartésiennes (x, y), où l'axe des x est parallèle aux bandes d'amenées de courant, tous les points ayant une même ordonnée y sont équipotentiels. Par contre, deux points de même abscisse x (et d'ordonnée différente) sont à des potentiels différents, sauf à être équidistants de l'axe médian qui est un axe de symétrie de la cellule. En pratique, dès que la distance entre les deux bandes électroconductrices dépasse par exemple 10 cm, le temps de commutation d'une cellule est supérieur à la minute.

On peut certes diviser fictivement cette distance en multipliant le nombre de bandes électroconductrices. Ainsi pour un vitrage d'une largeur 1, on prévoit comme précédemment une bande électroconductrice à y = 0 et une seconde bande à y = 1, auxquelles viennent s'ajouter des bandes à y = 1/3 et y = 21/3 - en alternant les faces de contact. La cellule alors formée est équivalente à un ensemble de 3 petites cellules identiques montées en parallèle, chaque petite cellule ayant une résistance trois fois plus faible. Mais un tel montage laisse apparent un réseau de bandes électroconductrices ce qui nuit à l'aspect général du vitrage.

Ce qui est vrai des vitrages électrochromes fonctionnant en transmission, l'est également d'autres systèmes électrochromes du type affichage ou miroir qui comportent obligatoirement au moins une couche électroconductrice transparente dont la conductivité est relativement faible en comparaison, par exemple, d'une couche métallique épaisse.

Par ailleurs, quel que soit le mode de fonctionnement du système électrochrome - insertion de protons ou d'autres cations ou autre, par exemple, réduction/dissolution d'un sel métallique -, on retrouve les mêmes problèmes liés à ces chutes ohmiques.

L'invention a pour objet principal un procédé d'utilisation d'un système électrochrome de grandes dimensions dont le temps de commutation d'un état coloré à un état décoloré et réciproquement soit inférieur à 30 secondes même si la largeur du vitrage est par exemple de l'ordre de 50 cm, ce qui correspond aux dimensions des vitrages de bâtiment ou de véhicules automobiles.

Ce problème technique est résolu selon l'invention par un procédé d'utilisation d'un système constitué de deux feuilles de verre formant un vitrage et revêtues chacune d'une couche électroconductrice, ces couches électroconductrices étant séparées successivement par une couche d'un matériau électrochrome, un électrolyte et une contre-électrode, lesdites couches électroconductrices étant munies chacune d'une bande électroconductrice réalisée dans un matériau dont la conductivité électrique est grande par rapport à celle des couches électroconductrices, les bandes électroconductrices étant disposées le long de bords diagonalement opposés du vitrage et reliées à un générateur de tension. Selon l'invention, ce générateur applique en phase de coloration ou, respectivement, en phase de décoloration, entre 2 points A et B à proximité immédiate des bandes électroconductrices, une différence de potentiel $U_1(t)=(V_A-V_B)$ (t) telle qu'entre le point A et un point R de l'autre couche électroconductrice que celle où se trouve le point A, faisant directement face au point A, on a une différence de potentiel $U_2=(V_A-V_R)$ (t)=$U_o$, où $U_o$ est constante et choisie dans le domaine de stabilité de la réaction de coloration ou, respectivement, de décoloration.

L'invention a également pour objet l'application d'un tel procédé à des systèmes électrochromes connus et un système électrochrome adapté pour la mise en oeuvre de ce procédé.

Les chutes ohmiques étant directement liées à la distance entre les électrodes, il est généralement opéré avec des bandes électroconductrices parallèles à la longueur du vitrage.

En fonctionnement traditionnel, on impose la différence de potentiel entre les deux bandes A et B, autrement dit entre )deux points d'ordonnées extrêmes; selon l'invention, le potentiel est imposé entre deux points de même abscisse, disposés du même côté du vitrage mais sur des couches électroconductrices différentes. De cette façon, la tension efficace est maximale au temps t = 0 et de ce fait l'apparition de la coloration - ou au contraire sa disparition - est plus rapidement sensible à un observateur. Il peut être noté que le type d'alimentation proposé ne permet pas de compenser réellement les chutes ohmiques ; ainsi si une différence de potentiel $U_o$ est imposée d'un côté du vitrage, sauf aux )extrémités du vitrage (y = 0 ou y = 1) deux points se faisant face ont toujours entre eux une différence de potentiel V(y) inférieure à la tension imposée. Toutefois, on constate expérimentalement que cette valeur V(y) est toujours supérieure à la valeur V' (y) obtenue lorsque l'on impose Uo entre deux bandes extrêmes du vitrage $U_1=U_o$; en conséquence, la coloration maximale est atteinte beaucoup plus rapidement et on peut atteindre pour des vitrages de par exemple (40 x 80) $cm^2$ des temps de réponse globaux de l'ordre de 30 secondes.

Par rapport aux vitrages électrochromes connus de l'art on observe en fait avec un vitrage selon l'invention une différence beaucoup plus marquée entre les états transitoires de coloration des régions marginales et les états transitoires de coloration de la région centrale du vitrage; la valeur de la différence de potentiel effective entre deux points du vitrage se faisant face dépend beaucoup plus que précédemment de la position de ces points. Toutefois, quelle que soit cette position la différence de potentiel effective est plus élevée qu'avec un vitrage selon l'art. Ceci a pour conséquence une coloration non quasi uniforme mais avec un contraste très fort, les bords du vitrage apparaissant très rapidement bleu-nuit alors que la coloration de la partie centrale n'apparaît qu'à la fin du temps de commutation. Mais bien sûr, dès ce moment la teinte du vitrage est parfaitement uniforme.

Selon un premier mode de réalisation de l'invention, on détermine par des enregistrements voltampérométriques préalables quelle doit être la différence de potentiel $U_1$ à appliquer au temps t pour obtenir une différence de potentiel $U_2$ constante au cours du temps. Ces valeurs déterminées, il suffit de programmer en conséquence le générateur de tension.

Pour simplifier cette programmation, on peut approximer la courbe $U_1 = f(t)$ par une fonction exponentielle, ce qui simplifie l'électronique associée au générateur de tension mais ne supprime pas la nécessité des essais en vraie grandeur, à renouveler pour chaque modèle de vitrage, afin de déterminer les paramètres de la fonction exponentielle.

Pour obvier cette dernière difficulté, il est préférable d'utiliser un montage avec 3 électrodes, du type potentiostat en utilisant par exemple un amplificateur opérationnel. On place alors une électrode de référence au point R. Pour une question d'équilibre des charges électriques, quelle que soit la position de cette électrode de référence sur la droite y = 0, tous les points de cette droite sont équipotentiels. En conséquence l'électrode de référence peut être indifféremment constituée par une bande électroconductrice couvrant toute la longueur du vitrage (et donc identique à la bande formant l'électrode A) ou seulement une partie de celle-ci.

Lorsque l'électrode de référence R est constituée par une bande électroconductrice de la longueur du vitrage, une des deux feuilles de verre se trouve avantageusement munie de deux électrodes montées sur deux bords parallèles. Ce montage peut alors être de plus exploité pour remédier à un autre handicap des vitrages électrochromes, à savoir que la cinétique des réactions peut être très faible à basse température et notamment pour des températures inférieures à 10°C. Dans ce cas, la couche électroconductrice transparente située entre ces deux électrodes peut être utilisée à titre de couche chauffante, grâce au dégagement de chaleur - dû à la résistance de ladite couche - qui se produit lorsqu'on applique une différence de potentiel entre ces deux électrodes. De préférence, la différence de potentiel appliquée pour ce préchauffage est supérieure à 20 Volts et de l'ordre de 24 Volts, ce qui correspond plus généralement à une tension de l'ordre de 0,5 Volt par centimètre de distance entre les électrodes. Cette phase de préchauffage peut par exemple précéder toute coloration et être d'une durée de l'ordre de 2 minutes. Compte tenu de la proximité de la seconde feuille de verre, celle-ci a une tendance à se charger pendant cette phase de coloration, ce qui à la longue entraîne un bleuissement qui peut être avantageusement évité en utilisant une tension alternative.

D'autres détails de caractéristiques avantageuses de l'invention ressortent de la description faite ci-après en référence aux dessins annexés qui représentent :

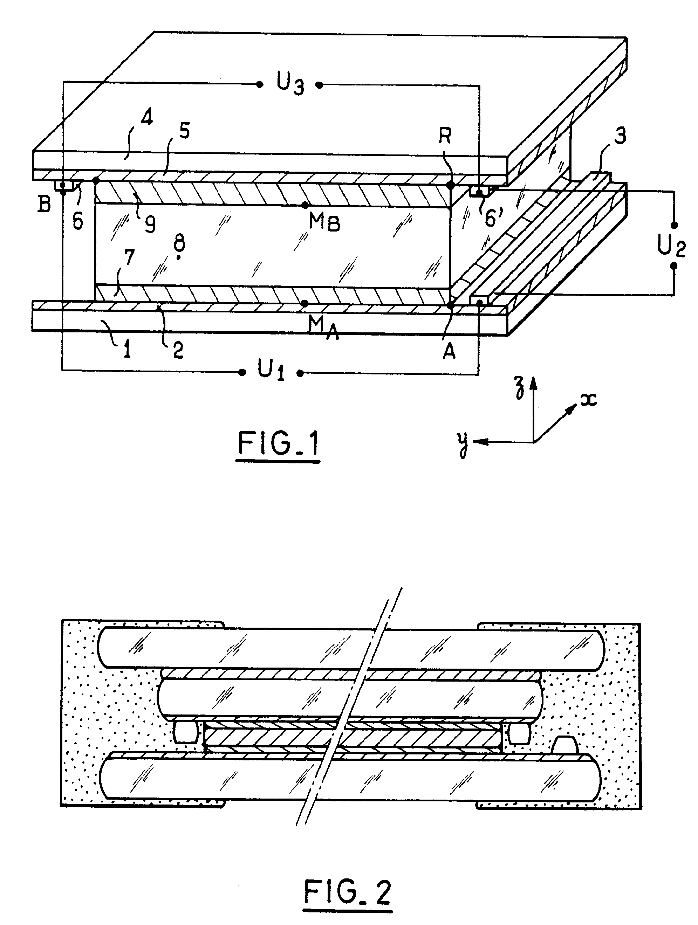

. **figure 1** : un schéma de principe d'une cellule électrochrome selon l'invention,

. **figure 2** : une vue en coupe d'un toit en verre pour véhicules automobiles.

A la figure 1 est schématisée une cellule électrochrome ; par souci de clarté, les rapports d'épaisseur entre les différents éléments du système n'ont pas été respectés. Cette cellule est constituée par une feuille de verre 1 revêtue d'une couche électroconductrice transparente 2, munie d'une bande d'amenée de courant 3. Cette bande 3 est de préférence parallèle à la longueur L du vitrage qui est par ailleurs d'une largeur 1. La feuille de verre 1 fait face à une seconde feuille de verre 4 qui est de même revêtue d'une couche électroconductrice transparente 5 munie d'une bande d'amenée de courant 6. Entre les deux électrodes transparentes 2, 5, on trouve successivement une couche 7 d'un matériau électrochrome anodique (de préférence de l'oxyde d'iridium), une couche électrolytique à conduction protonique 8 (de préférence un complexe polymérique entre du polyoxyde d'éthylène et de l'acide orthophosphorique rigoureusement anhydre) et une couche 9 d'un matériau électrochrome cathodique (de préférence du trioxyde de tungstène).

A titre indicatif, on peut utiliser des couches présentant plus précisément les caractéristiques suivantes :

- **Substrats (1 et 4)** :
  . feuille de verre float de 3 mm d'épaisseur,
- **Couches électroconductrices transparentes (2 et 5)** :
  . couche d'oxyde d'indium dopé à l'étain, déposée par pulvérisation cathodique magnétron,
  . épaisseur 400 nm,
  . résistance par carré 5 Ohms.
- **Couche électrochrome cathodique (9)** :
  . couche d'oxyde de tungstène déposée par évaporation thermique dans un creuset de molybdène sous une pression d'air de 5 x $10^{-5}$ torr,
  . épaisseur 260 nm.
- **Electrolyte (polymère organique 8)** :
  . Solution solide d'acide phosphorique anhydre dans du polyoxyde d'éthylène,
  . **préparation** :
  . Dans des conditions rigoureusement anhydres, on dissout par litre de solvant de l'acide phosphorique (17,5g) normapur et du polyoxyde d'éthylène de masse moléculaire égale à 5 000 000 (densité 1,21, température de transition vitreuse -40°C, rapport O/H du nombre d'atomes d'oxygène du polymère sur le nombre d'atomes d'hydrogène de l'acide égal à 0,66).
  . Le solvant commun est par exemple un mélange 50-50 d'acétonitrile et de tétrahydro-furanne.

. La solution est coulée sur une plaque de verre revêtue d'une couche d'oxyde de tungstène déposée comme indiqué précédemment. L'épaisseur uniforme est obtenue par la méthode du tire-film. La coulée est effectuée sous une atmosphère à taux d'humidité contrôlé. Après évaporation du solvant, on obtient un film de 50 micromètres dont la conductivité à 20°C est de $9.10^{-5}$ Ohm.$^{-1}$.cm$^{-1}$ et dont la transmission lumineuse est supérieure à 85 %. Le taux d'humidité au moment de la coulée doit être de préférence compris entre 40 et 100 ppm ce qui permet d'obtenir ultérieurement un contraste optimal.

- **Couche électrochrome anodique** :

. couche d'oxyde d'iridium déposée par pulvérisation cathodique assistée par un champ magnétique, sous une pression de 6 millitorrs d'un mélange gazeux oxygène/hydrogène (dans un rapport 80-20),

. épaisseur 55 nanomètres.

De préférence, la couche électrolytique est déposée sur la couche d'oxyde de tungstène dans un bref délai après le dépôt de celle-ci. L'assemblage du vitrage est effectué à l'autoclave à une température de 90° C sous une pression de 15 kg/cm$^2$.

Les données ci-dessus sont données exclusivement à titre d'exemple et ne doivent pas être considérées comme limitant la portée de la présente invention qui s'applique à toutes les cellules électrochromes de grandes dimensions.

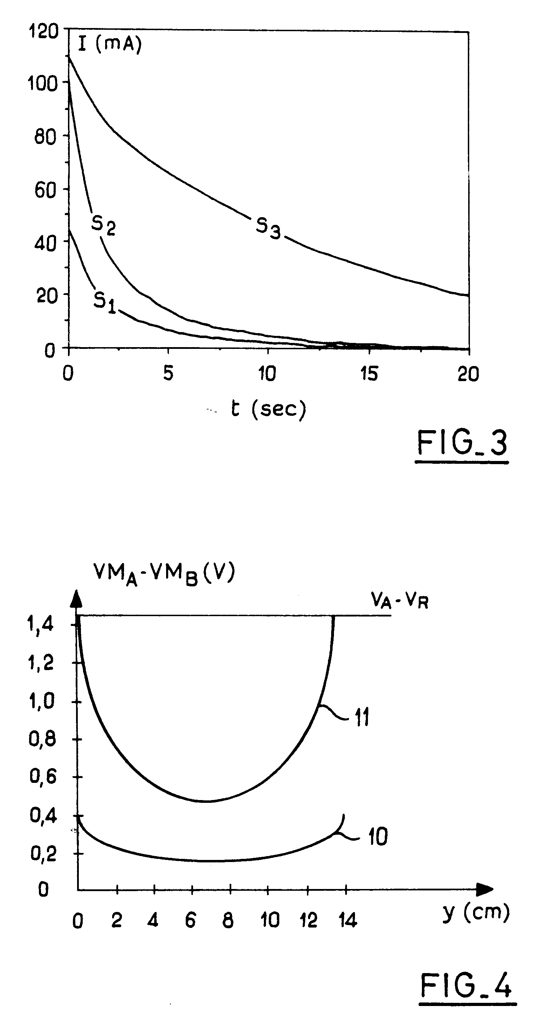

De façon traditionnelle, on impose entre le point A - qui peut être considéré comme un point de la bande électroconductrice 3 - et le point B - qui peut être considéré comme un point de la bande électroconductrice 6 - une différence de potentiel $V_1$ fixe, choisie dans le domaine de stabilité de la réaction électrochimique souhaitée. Un tel montage a été utilisé pour trois cellules S1, S2 et S3 homothétiques, dont les bandes d'amenée de courant sont respectivement espacées de 3, 4,5 et 9 centimètres. La figure 3 montre la variation au cours du temps de l'intensité du courant de coloration. Pour les deux petites cellules, le courant $I_o$ au temps t = 0 est proportionnel à la surface et le temps de coloration est quasi identique. De plus après 5 secondes, l'essentiel du processus de coloration est achevé. Par contre, avec la cellule S3, on constate que le courant $I_o$ n'est pas proportionnel à la surface et est limité par les chutes ohmiques. En pratique ceci interdit la réalisation d'une cellule dont les bandes d'amenée de courant sont espacées de plus de 10 cm - sauf à accepter des temps de commutation supérieurs à la minute.

Une autre façon d'analyser le problème est d'examiner deux points $M_A$ et $M_B$ qui dans le repère (x, y, z) schématisé à la figure 1 ont respectivement pour coordonnées (x, y, a) et (x, y, b). Entre ces deux points, on a au temps t une différence de potentiel V = $VM_A$ - $VM_B$. Par ailleurs si on choisit des bandes électroconductrices 3, 6 en cuivre ou tout autre matériau très conducteur, on peut considérer que tous les points $M_A$ - et respectivement $M_B$ - d'une ordonnée y donnée sont équipotentiels. On a tracé à la figure 4 la courbe 10 représentative des différentes valeurs de V en fonction de l'ordonnée des couples des points ($M_A$, $M_B$), ceci pour une cellule de 14 cm de large (distance A-B) et une différence de potentiel $U_1$ de 1,4 Volt et à l'instant t=O. On constate que la tension effective V est très inférieure à $U_1$, et que cette différence est encore accentuée pour la zone centrale de la cellule.

Si maintenant on choisit d'opérer selon l'invention en maintenant une différence de potentiel fixe $U_2$ entre le point A et le point R lui faisant face sur la bande conductrice 6', on obtient la courbe 11 établie pour $U_2$ = 1,4 Volt. On note que pour tout couple de point ($M_A$, $M_B$), la différence de potentiel observée V est toujours inférieure ou égale à $U_2$. Pour la réaction électrochimique souhaitée, il faut et il suffit donc d'imposer une valeur $U_2$ comprise dans le domaine dit de stabilité électrochimique de l'invention. Par ailleurs, sauf sur les bords, la tension efficace n'est pas égale à la tension imposée $U_2$ ; l'invention ne permet donc pas de s'affranchir totalement des chutes ohmiques. Toutefois, la comparaison des courbes 10 et 11 montre que la tension efficace selon l'invention est environ 3 fois plus élevée pour tout couple de points $M_A$, $M_B$. Il en résulte une coloration - ou une décoloration - beaucoup plus rapide. De plus on constate que l'effet des bords est plus marqué qu'avec un montage traditionnel ; ceci se traduit par une apparition quasi instantanée de la couleur à proximité des bords du vitrage, mais plus tardivement dans la région centrale. Cet aspect de coloration progressive qui "part" des bords est caractéristique des vitrages selon l'invention.

Pour des bornes A et B espacées de 14 cm, le gain en temps de coloration est de 6 secondes, soit un gain de temps de 30 %. Pour des bornes encore plus espacées le gain augmente encore. Ainsi on peut réaliser un toit électrochrome dont la plus petite longueur excède 30 cm et dont pourtant le temps de commutation est inférieur à 1 minute à 20° C, soit dans ce cas une division par 6 du temps de commutation qui peut être typiquement réduit de 3 minutes à 30 secondes. .

Le montage selon l'invention dote la couche électroconductrice 5 de deux bandes d'amenée de courant 6 et 6'. Avantageusement, on peut utiliser la résistance électrique de cette couche 5 pour chauffer la cellule. Pour cela, avant la coloration, on applique entre le point B et le point R, une différence de potentiel $U_3$ de par exemple 24 Volts, ce qui permet d'élever la température de la couche électrolytique dont on sait que les performances maximales sont obtenues pour une température comprise entre 20 et 80°C. La différence de potentiel $U_3$ est de préférence une tension alternative afin d'éviter la polarisation des couches de matériaux électrochromes, avec dans ce cas par exemple une tension efficace de 24 Volts. Il doit être noté que le chauffage peut être utilisé indépendamment de l'état d'oxydation des couches électrochromiques.

L'invention a été décrite en référence à une cellule dont l'électrolyte est à conduction protonique mais il doit être entendu qu'elle s'applique mutatis mutandis à tous les systèmes électrochromes notamment aux cellules dont l'électrolyte est à conduction ionique, par exemple au lithium. De même, d'autres matériaux que ceux cités peuvent être employés pour la réalisation de la couche électrochrome et de la contre-électrode, ceci notamment en vue de l'obtention d'autres teintes, les valeurs des tensions appliquées devant être ajustées en fonction des nouveaux équilibres thermodynamiques. De plus, un montage à 3 électrodes peut être utilisé plus généralement dans tout système nécessitant au moins une couche électroconductrice transparente, que ce soit les systèmes fonctionnant par insertion/désinsertion d'ions comme ceux évoqués dans ce mémoire, les systèmes d'affichage des systèmes avec un gel électrochrome ou encore à cristaux liquides.

## Revendications

1. Procédé de mise en action d'un système électrochrome constitué de deux feuilles de verre (1, 4) formant un vitrage et revêtues chacune d'une couche électroconductrice (2, 5), ces couches électroconductrices étant séparées successivement par une couche d'un matériau électrochrome (9), un électrolyte (8) et une contre électrode (7), lesdites couches électroconductrices (2, 5) étant munies chacune d'une bande électroconductrice (3, 6) réalisée dans un matériau dont la conductivité électrique est grande par rapport à celle des couches électroconductrices (2,5), les bandes électroconductrices (3, 6) étant disposées le long de bords diagonalement opposés du vitrage et reliées à un générateur de tension, **caractérisé en ce que** ledit générateur de tension applique en phase de coloration ou, respectivement, en phase de décoloration, entre deux points A et B appartenant respectivement aux couches électroconductrices (2, 5) et à proximité immédiate des bandes électroconductrices (3, 6) une différence de potentiel $U_1(t) = (V_A - V_B)$ (t) telle qu'entre le point A et un point R de l'autre couche électroconductrice que celle où se trouve le point A, le point R faisant directement face au point A, on a une différence de potentiel $U_2 = (V_A - V_R)$ (t)

= $U_o$, où $U_o$ est constant et choisie dans le domaine de stabilité de la réaction de coloration ou, respectivement, de décoloration.

2. Procédé selon la revendication 1, **caractérisé en ce que** la différence de potentiel $U_1$ à appliquer au temps t est déterminée préalablement par des enregistrements voltampérométriques.

3. Procédé selon la revendication 1, **caractérisé en ce que** la différence de potentiel $U_1 = f(t)$ est approximée par une fonction exponentielle.

4. Procédé selon l'une des revendications 1 à 3 où le système électrochrome est un système électrochrome dont les bandes électroconductrices (3, 6) sont en cuivre.

5. Procédé selon l'une des revendications 1 à 3 où le système électrochrome est un système électrochrome dont la couche de matériau électrochrome (9) est constituée d'un matériau électrochrome cathodique tel que le trioxyde de tungstène.

6. Procédé selon l'une des revendications 1 à 3 où le système électrochrome est un système électrochrome dont la contre-électrode (7) est constituée d'un matériau électrochrome anodique tel que l'oxyde d'iridium.

7. Procédé selon l'une des revendications 1 à 3 où l'électrolyte (8) est un électrolyte à conduction protonique, de préférence un complexe polymérique entre du polyoxyde d'éthylène et de l'acide orthophosphorique anhydre.

8. Procédé selon l'une des revendications 1 à 3 où l'électrolyte (8) est un électrolyte à conduction ionique au lithium.

9. Système électrochrome constitué de deux feuilles de verre (1, 4) formant un vitrage et revêtues chacune d'une couche électroconductrice (2, 5), ces couches électroconductrices étant séparées successivement par une couche d'un matériau électrochrome (9), un électrolyte (8) et une contre électrode (7), lesdites couches électroconductrices (2, 5) étant munies chacune d'une bande électroconductrice (3, 6) réalisée dans un matériau dont la conductivité électrique est grande par rapport à celle des couches électroconductrices (2,5), les bandes électroconductrices (3, 6) étant disposées le long de bords diagonalement opposés du vitrage et reliées à un générateur de tension qui applique en phase de coloration ou, respectivement, en phase de décoloration, entre deux points A et B appartenant respectivement aux couches électroconductrices (2, 5) et à proximité immédiate des bandes électroconductrices (3, 6) une différence de potentiel $U_1$, **caractérisé en ce qu'**il comporte une troisième bande électroconductrice (6'), faisant face à la bande (3) à proximité de laquelle se trouve le point A et disposée sur l'autre couche électroconductrice que celle où se trouve le point A, et en ce que ledit générateur est destiné à appliquer une différence de potentiel $U_1(t) = (V_A-V_B)$ (t), telle que la différence de potentiel $U_2$ entre la bande (3) à proximité de laquelle se trouve le point A et la troisième bande (6') soit constante..

10. Système électrochrome selon la revendication 9, **caractérisé en ce que** la bande électroconductrice (6) située à proximité du point B et la troisième bande (6') sont reliées à un générateur de tension pouvant appliquer une différence de potentiel $U_3$, utilisée pour le chauffage de la cellule lorsque la tension $U_2$ appliquée est nulle.

11. Système électrochrome selon la revendication 10, **caractérisé en ce que** la différence de potentiel $U_3$ est alternative.

12. Système électrochrome selon la revendication 11, **caractérisé en ce que** $U_3$ efficace vaut 0,5 Volt par centimètre de distance entre les électrodes.

13. Application du procédé selon l'une des revendications 1 à 8 à la réalisation d'un toit électrochrome dont la plus petite longueur excède 30 cm et le temps de commutation état coloré-état décoloré est inférieur à 1 min à 20 C.

**Patentansprüche**

1. Verfahren zur Betätigung eines elektrochromen Systems, das aus zwei eine Verglasung bildenden Glasscheiben (1, 4) besteht, die jeweils mit einer elektrisch leitenden Schicht (2, 5) beschichtet sind, wobei diese elektrisch leitenden Schichten (2, 5) aufeinanderfolgend durch eine Schicht aus einem elektrochromen Material (9), einem Elektrolyten (8) und einer Gegenelektrode (7) getrennt und jeweils mit einem elektrisch leitenden Band (3, 6) ausgerüstet sind, das aus einem Material besteht, dessen elektrische Leitfähigkeit, bezogen auf die der elektrisch leitenden Schichten (2, 5) hoch ist, und die elektrisch leitenden Bänder (3, 6) entlang der einander diagonal gegenüberliegenden Ränder der Verglasung angeordnet und an eine Spannungsquelle angeschlossen sind, **dadurch gekennzeichnet, daß** mit dieser Spannungsquelle in der Färbungs- bzw. Entfärbungsphase zwischen zwei Punkten A und B, die sich jeweils auf den elektrisch leitenden Schichten (2, 5) in unmittelbarer Nähe der elektrisch leitenden Bänder (3, 6) befinden, eine solche Potentialdifferenz $U_1(t) = (V_A - V_B)(t)$ erzeugt wird, daß zwischen Punkt A und einem Punkt R, der sich auf der anderen elektrisch leitenden Schicht wie Punkt A und direkt gegenüber diesem befindet, eine Potentialdifferenz $U_2 = (V_A - V_R)(t) = U_o$ entsteht, wobei $U_o$ konstant und aus dem Stabilitätsbereich der Färbungs- bzw. der Entfärbungs-reaktion ausgewählt ist.

2. Verfahren nach Anspruch 1, **dadurch gekennzeichnet, daß** die zum Zeitpunkt t angelegte Potentialdifferenz $U_1$ zuvor durch voltamperemetrische Einstellungen festgelegt ist.

3. Verfahren nach Anspruch 1, **dadurch gekennzeichnet, daß** die Potentialdifferenz $U_1 = f(t)$ durch eine Exponential-funktion angenähert ist.

4. Verfahren nach einem der Ansprüche 1 bis 3, worin das elektrochrome System ein solches ist, dessen elektrisch leitende Bänder (3, 6) aus Kupfer bestehen.

5. Verfahren nach einem der Ansprüche 1 bis 3, worin das elektrochrome System ein solches ist, dessen Schicht aus elektrochromem Material (9) aus einem kathodischen elektrochromen Material wie Wolframtrioxid besteht.

6. Verfahren nach einem der Ansprüche 1 bis 3, worin das elektrochrome System ein solches ist, dessen Gegenelektro-de (7) aus einem anodischen elektrochromen Material wie Iridiumoxid besteht.

7. Verfahren nach einem der Ansprüche 1 bis 3, worin der Elektrolyt (8) ein protonenleitender Elektrolyt und vorzugsweise ein Polymerkomplex aus Polyethylenoxid und wasserfreier Ortho-Phosphorsäure ist.

8. Verfahren nach einem der Ansprüche 1 bis 3, worin der Elektrolyt (8) ein Lithiumionen-leitender Elektrolyt ist.

9. Elektrochromes System, das aus zwei eine Verglasung bildenden Glasscheiben (1, 4) besteht, die jeweils mit einer elektrisch leitenden Schicht (2, 5) beschichtet sind, wobei diese elektrisch leitenden Schichten (2, 5) aufeinanderfolgend durch eine Schicht aus einem elektrochromen Material (9), einem Elektrolyten (8) und einer Gegenelektrode (7) getrennt und jeweils mit einem elektrisch leitenden Band (3, 6) ausgerüstet sind, das aus einem Material besteht, dessen elektrische Leitfähigkeit, bezogen auf die der elektrisch leitenden Schichten (2, 5) hoch ist, und die elektrisch leitenden Bänder (3, 6) entlang der einander diagonal gegenüberliegenden Ränder der Verglasung angeordnet und an eine Spannungsquelle angeschlossen sind, die in der Färbungs- bzw. Entfärbungs-phase zwischen zwei Punkten A und B, die sich jeweils auf den elektrisch leitenden Schichten (2, 5) in unmittelbarer Nähe der elektrisch leitenden Bänder (3, 6) befinden, eine Potentialdifferenz $U_1$ erzeugt, **dadurch gekennzeichnet, daß** es ein drittes elektrisch leitendes Band (6') enthält, das dem Band (3), in dessen Nähe sich der Punkt A befindet, gegenüberliegt und auf der anderen elektrisch leitenden Schicht wie derjenigen, auf der sich Punkt A befindet, angeordnet ist, und daß die Spannungsquelle vorgesehen ist, eine solche Potentialdifferenz $U_1(t)$ = $(V_A - V_B)(t)$ zu erzeugen, daß die Potentialdifferenz $U_2$ zwischend dem Band (3), in dessen Nähe sich der Punkt A befindet, und dem dritten Band (6') konstant bleibt.

10. Elektrochromes System nach Anspruch 9, **dadurch gekennzeichnet, daß** das in der Nähe des Punktes B befindliche elektrisch leitende Band (6) und das dritte Band (6') an eine Spannungsquelle angeschlossen sind, die eine Potentialdifferenz $U_3$ erzeugen kann, die zur Erwärmung der Zelle verwendet wird, wenn die angelegte Spannung $U_2$ null ist.

11. Elektrochromes System nach Anspruch 10, **dadurch gekennzeichnet, daß** die Potentialdifferenz $U_3$ wechselt.

12. Elektrochromes System nach Anspruch 11, **dadurch gekennzeichnet, daß** $U_{3effektiv}$ 0,5 V/cm Abstand zwischen den Elektroden beträgt.

13. Anwendung des Verfahrens nach einem der Ansprüche 1 bis 8 zur Herstellung eines elektrochromen Daches, dessen kleinste Länge größer als 30 cm und dessen Wechselzeit vom gefärbten zum entfärbten Zustand bei 20 °C kleiner als eine Minute ist.

**Claims**

1. Process for operating an electrochromic system, constituted of two glass sheets (1, 4) forming a pane and each coated with an electrically conducting film (2, 5), these electrically conducting films being separated, successively, by a film of electrochromic material (9), an electrolyte (8) and a counter-electrode (7), said electrically conducting films (2, 5) being each provided with an electrically conducting strip (3, 6) made of a material having an electrical conductivity that is much higher than that of the electrically conducting films (2, 5), the electrically conducting strips (3, 6) being disposed along diagonally opposite edges of the pane and connected to avoltage generator, characterized in that said voltage generator applies, in colouration phase or, respectively, in decolouration phase, between two points A and B belonging, respectively, to the electrically conducting films (2, 5) and in immediate proximity to the electrically conducting strips (3, 6), a potential difference $U_1 (t) = (V_A-V_B) (t)$ such that, between the point A and a point R of the other electrically conducting film than that in which the point A is situated, the point R being directly opposite the point A, there is a potential difference $U_2 = (V_A-V_R) (t) = U_0$, where $U_0$ is constant and is chosen in the stability range of the colouration or, respectively, decolouration reaction.

2. Process according to Claim 1, characterized in that the potential difference $U_1$ to be applied at time t is determined in advance by voltammetric recordings.

3. Process according to Claim 1, characterized in that the potential difference $U_1 = f(t)$ is approximated by an exponential function.

4. Process according to one of Claims 1 to 3 in which the electrochromic system is one, the electrically conducting strips (3, 6) of which are of copper.

5. Process according to one of Claims 1 to 3 in which the electrochromic system is one, of which the film of electrochromic material (9) is constituted of a cathodic electrochromic material, such as tungsten trioxide.

6. Process according to one of Claims 1 to 3 in which the electrochromic system is one, of which the counter-electrode (7)is constituted of an anodic electrochromic material, such as iridium oxide.

7. Process according to one of Claims 1 to 3, in which the electrolyte (8) is an electrolyte having proton conductivity, preferably a polymeric complex between polyethylene oxide and anhydrous orthophosphoric acid.

8. Process according to one of Claims 1 to 3, in which the electrolyte (8) is an electrolyte with lithium ion conductivity.

9. Electrochromic system constituted of two glass sheets (1, 4) forming a pane and each coated with an electrically conducting film (2, 5), these electrically conducting films being separated, successively, by a film of an electrochromic material (9), an electrolyte (8) and a counter-electrode (7), said electrically conducting films (2, 5) being each equipped with an electrically conducting strip (3, 6) made of a material having an electrical conductivity that is much higher than that of the electrically conducting films (2, 5), the electrically conducting strips (3, 6) being disposed along diagonally opposite edges of the pane and connected to a voltage generator, which applies, in the colouration or, respectively, the decolouration phase, between two points A and B belonging, respectively, to the electrically conducting films (2, 5) and in immediate proximity to the electrically conducting strips (3, 6), a potential difference $U_1$, characterized in that it comprises a third electrically conducting strip (6'), facing the strip (3) in proximity to which is situated the point A and disposed on the other electrically conducting film than that in which the point A is situated, and in that said generator is intended for applying a potential difference $U_1$ (t) = $(V_A-V_B)$ (t) such that the potential difference $U_2$ between the strip (3) in proximity to which the point A is situated and the third strip (6') is constant.

10. Electrochromic system according to Claim 9, characterized in that the electrically conducting strip (6) situated in proximity to the point B and the third strip (6') are connected to a voltage generator capable of applying a potential difference $U_3$, used for the heating of the cell when the applied voltage $U_2$ is zero.

11. Electrochromic system according to Claim 10, characterized in that the potential difference $U_3$ is alternating.

12. Electrochromic system according to Claim 11, characterized in that effective $U_3$ has the value 0.5 volt per centimetre of distance between the electrodes.

13. Application of the process according to one of Claims 1 to 8 to the construction of an electrochromic roof, the smallest length of which exceeds 30 cm and the switching time of which from the colouration state to the decolouration state is less than 1 minute at 20°C.

FIG.1

FIG.2

FIG_3

FIG_4